# EUROPEAN PATENT APPLICATION

(11) **EP 4 783 277 A1**
(43) Date of publication of application: **29.07.2026**
(21) Application number: 25211379.0
(22) Date of filing: 27.10.2025
(51) Int. Cl.: H01M 10/04, H01M 50/107, H01M 50/528

(54) **ELECTRODE ASSEMBLY AND SECONDARY BATTERY INCLUDING SAME**

(30) Priority: 24.01.2025 KR 20250011347
(71) Applicant: SAMSUNG SDI CO., LTD., Yongin-si, Gyeonggi-do 17084 (KR)
(72) Inventor: Moon, Dongsik, 17084 Yongin-si, Gyeonggi-do (KR)
(74) Representative: Meissner Bolte Partnerschaft mbB

(57) **Abstract**

An electrode assembly (1) includes a first electrode (102), a second electrode (104), a separator (106) between the first electrode (102) and the second electrode (104), a first electrode substrate tab (110) connected to the first electrode (102), and a second electrode substrate tab (120) connected to the second electrode (104), wherein the first electrode (102), the second electrode (104), and the separator (106) have a stack structure in one direction, wherein the first electrode substrate tab (110) includes a first substrate (111) protruding from the first electrode (102) in a first direction (211) crossing a stacking direction of the stack structure and a second substrate (113) protruding from the first electrode (102) in a second direction (213) crossing the stacking direction, and wherein the first direction (211) and the second direction (213) differ from each other.

## Description

### BACKGROUND

### 1. Field

The present invention relates to an electrode assembly and a secondary battery including the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, as demand for wearable devices such as headphones, earphones, smart watches, and body-attachable medical devices using Bluetooth has increased, there is also an increasing demand for secondary batteries having a small size. For example, such a secondary battery may include those where the height is significantly smaller than the width, such as a coin cell or a button cell.

A coin cell or a button cell battery includes an accommodating can that houses a jelly-roll type electrode assembly and a cap assembly joined to an upper part of the accommodating can to seal the electrode assembly from the outside.

The above information disclosed in this Background section is for enhancement of understanding of the background of the present invention, and therefore, it may contain information that does not constitute related (or prior) art.

### SUMMARY

The present invention includes an electrode assembly, including a first electrode, a second electrode, a separator between the first electrode and the second electrode, a first electrode substrate tab connected to the first electrode, and a second electrode substrate tab connected to the second electrode, wherein the first electrode, the second electrode, and the separator have a stack structure in one direction, wherein the first electrode substrate tab includes a first substrate protruding from the first electrode in a first direction crossing a stacking direction of the stack structure and a second substrate protruding from the first electrode in a second direction crossing the stacking direction, and wherein the first direction and the second direction differ from each other.

The second electrode substrate tab may include a third substrate protruding from the second electrode in a third direction crossing the stacking direction, and a fourth substrate protruding from the second electrode in a fourth direction crossing the stacking direction, resulting in first to fourth directions, and wherein the third direction and the fourth direction differ from each other.

The stack structure may have a cylindrical shape.

The first electrode substrate tab and the second electrode substrate tab may be bent in a direction parallel with the stacking direction of the stack structure, and the first electrode substrate tab and the second electrode substrate tab being arranged along a side surface of the stack structure.

The first electrode, the separator, and the second electrode may share a same central axis, and the first to fourth directions are radial directions based on the central axis.

A bending direction of the first electrode substrate tab may be the same as a bending direction of the second electrode substrate tab.

A bending direction of the first electrode substrate tab may be opposite to a bending direction of the second electrode substrate tab.

The first electrode substrate tab and the second electrode substrate tab may be secondarily bent in a direction toward a central axis of the stack structure.

The electrode assembly may further include a first electrode tab connected to the first electrode substrate tab, wherein the first electrode tab contacts end portions of each of the first substrate and the second substrate.

The first electrode tab may be on an upper surface of the stack structure.

The electrode assembly may further include a second electrode tab connected to the second electrode substrate tab, wherein the second electrode tab contacts end portions of each of the third substrate and the fourth substrate.

The second electrode tab may be on an upper surface of the stack structure.

The present invention further includes a secondary battery, including an electrode assembly, a case accommodating the electrode assembly, and a cap assembly sealing an open surface of the case, wherein the electrode assembly includes a first electrode, a second electrode, a separator between the first electrode and the second electrode, a first electrode substrate tab connected to the first electrode, and a second electrode substrate tab connected to the second electrode, wherein the first electrode, the second electrode, and the separator have a stack structure in one direction, wherein the first electrode substrate tab includes a first substrate protruding from the first electrode in a first direction crossing a stacking direction of the stack structure and a second substrate protruding from the first electrode in a second direction crossing the stacking direction, and wherein the first direction and the second direction differ from each other.

The second electrode substrate tab may include a third substrate protruding from the second electrode in a third direction crossing the stacking direction, and a fourth substrate protruding from the second electrode in a fourth direction crossing the stacking direction, resulting in first to fourth directions, and wherein the third direction and the fourth direction differ from each other.

The stack structure may have a cylindrical shape, and the first electrode substrate tab and the second electrode substrate tab may be bent in a direction parallel with a stacking direction of the stack structure, and the first electrode substrate tab and the second electrode substrate tab being along a side surface of the stack structure.

The first electrode, the separator, and the second electrode may share a same central axis, and the first to fourth directions may be radial directions based on the central axis.

A bending direction of the first electrode substrate tab may be the same as a bending direction of the second electrode substrate tab.

The cap assembly may include a first electrode terminal electrically connected to the first electrode, and a second electrode terminal electrically connected to the second electrode.

A bending direction of the first electrode substrate tab may be opposite to a bending direction of the second electrode substrate tab.

The cap assembly may include a first electrode terminal electrically connected to the first electrode, and the second electrode is electrically connected to the case.

However, the technical problem to be solved by the present invention is not limited to the above-mentioned problem, and other problems not mentioned herein, and aspects and features of the present invention that address such problems, will be clearly understood by those skilled in the art from the description of the present invention below.

However, aspects and features of the present invention are not limited to those described above, and other aspects and features not mentioned will be clearly understood by a person skilled in the art from the detailed description described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 is a perspective view schematically illustrating an electrode assembly according to an embodiment of the present invention;
FIG. 2 is a schematic diagram illustrating a stack structure of an electrode assembly according to an embodiment of the present invention;
FIG. 3 is a diagram illustrating bending directions of electrode substrate tabs of an electrode assembly according to an embodiment of the present invention;
FIG. 4 is a diagram illustrating a process of cutting end portions of electrode substrate tabs of an electrode assembly according to an embodiment of the present invention;
FIG. 5 is a diagram illustrating a process of welding end portions of electrode substrate tabs of an electrode assembly to electrode tabs according to an embodiment of the present invention;
FIG. 6 is a perspective view of an electrode assembly according to an embodiment of the present invention;
FIG. 7 is an exploded view of a secondary battery according to an embodiment of the present invention;
FIG. 8 is a perspective view of a secondary battery according to an embodiment of the present invention;
FIG. 9 is a perspective view of a secondary battery according to an embodiment of the present invention;
FIG. 10 is a cross-sectional view illustrating the interior of a secondary battery, as a comparative example;
FIG. 11 is a cross-sectional view illustrating the interior of a secondary battery, as a comparative example; and
FIG. 12 is a flowchart illustrating an example of a method of manufacturing an electrode assembly according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described in detail with reference to the accompanying drawings. The terms or words used in the present specification and claims are not to be interpreted as having restricted meanings or dictionary meanings and should be interpreted as meanings and concepts that are consistent with the technical idea of the present invention on the basis of the principle that an inventor can be his/her own lexicographer to appropriately define the concepts of terms to describe the inventor's invention in the best way.

The embodiments described in this specification and the configurations shown in the drawings are only some of the embodiments of the present invention and do not represent all of the technical idea, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, the element or layer may be directly on, connected, or coupled to the other element or layer, or one or more intervening elements or layers may be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B, and C, the phrase may refer to any and all suitable combinations or subsets of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of a device in use or operation in addition to the orientation depicted in the figures. For example, if the device in the figures is turned over, an element described as "below" or "beneath" other elements or features would then be oriented "above" or "over" the other elements or features. Thus, the term "below" may encompass both orientations of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms unless the context clearly indicates otherwise. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value greater than or equal to 1.0 and a maximum value less than or equal to 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is recognized as low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of that element, and another element may also be interposed between them.

In addition, it will be understood that when a component is referred to as being "linked," "coupled," or "connected" to another component, the elements may be directly linked, coupled, or connected to each other, or another component may be interposed between them.

Throughout the specification, when "A and/or B" is stated, it means A, B, or A and B, unless otherwise stated. That is, "and/or" includes any and all combinations of a plurality of items enumerated. When "C to D" is stated, it means greater than or equal to C and less than or equal to D, unless otherwise specified.

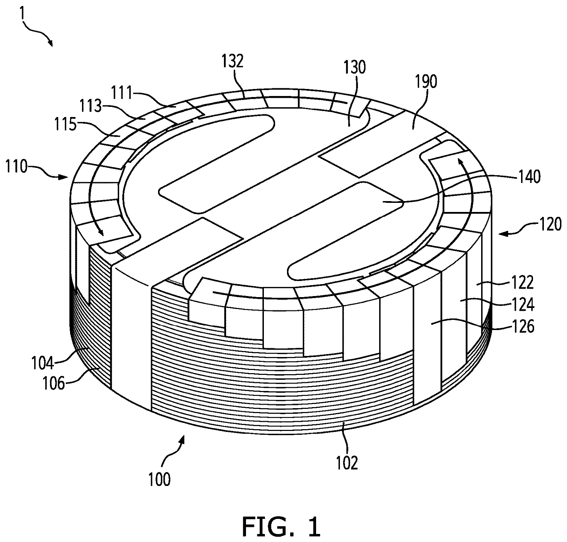

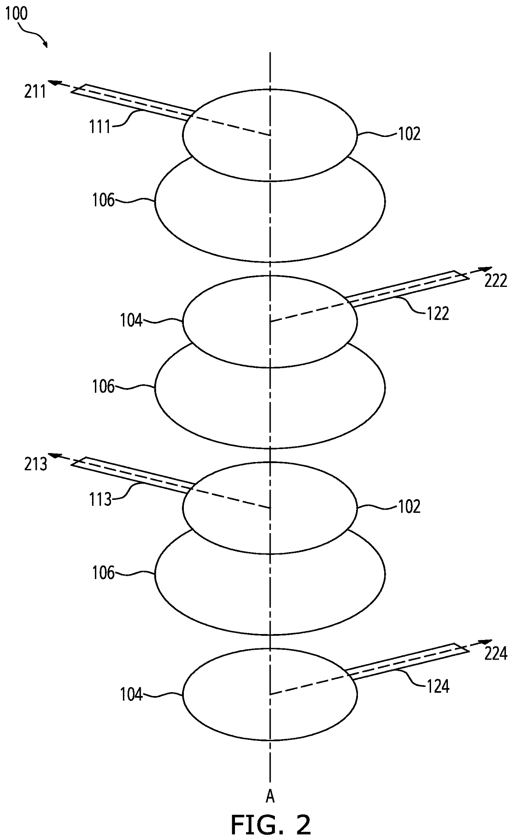

FIG. 1 is a perspective view schematically illustrating an electrode assembly according to an embodiment of the present invention, and FIG. 2 is a schematic diagram illustrating a stack structure of an electrode assembly according to an embodiment of the present invention.

Referring to FIGS. 1 and 2, an electrode assembly 1 according to an embodiment of the present invention may include a first electrode 102, a second electrode 104, a separator 106 interposed between the first electrode 102 and the second electrode 104, a first electrode substrate tab 110 connected to the first electrode 102, and a second electrode substrate tab 120 connected to the second electrode 104.

The first electrode 102 of the electrode assembly 1 may be an electrode that functions as either the positive electrode or the negative electrode in a secondary battery. The second electrode 104 of the electrode assembly 1 may be an electrode that has a polarity opposite that of the first electrode 102. For example, if the first electrode 102 is a positive electrode, the second electrode 104 may be a negative electrode. Conversely, if the first electrode 102 is a negative electrode, the second electrode 104 may be a positive electrode.

The first electrode 102 and the second electrode 104 may each include a coated region (or a coating portion) on both sides of a sheet substrate formed of a thin metal plate, in which an active material is applied, and an uncoated region (or a non-coating portion) where no active material is applied and the sheet substrate is exposed. For example, the first electrode 102 may be formed by coating a positive active material on an aluminum (Al) sheet substrate to form the positive electrode, and the second electrode 104 may be formed by coating a negative active material on a copper (Cu) sheet substrate to form the negative electrode.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and to attach the positive electrode active material well to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart electrical conductivity to the electrode. Any material that does not cause an undesirable chemical change in the rechargeable lithium battery and conducts electrons may be used. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in the form of a metal powder or a metal fiber; a conductive polymer such as a polyphenylene derivative; or a mixture thereof.

Al may be used as the current collector, but is not limited thereto.

A negative electrode for a rechargeable lithium battery may include a current collector and a negative electrode active material layer on the current collector. The negative electrode active material layer may include a negative electrode active material and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart electrical conductivity to the electrode. Any material that does not cause an undesirable chemical change in the rechargeable lithium battery and that conducts electrons may be used. Non-limiting examples thereof may include a carbon-based material such as natural graphite, artificial graphite, carbon black, acetylene black, ketjen black, a carbon fiber, a carbon nanofiber, or a carbon nanotube; a metal-based material including copper, nickel, aluminum, silver, etc., in the form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The porous substrate may be a polymer film formed of any one selected polymer, for example a polyolefin such as polyethylene or polypropylene, a polyester such as polyethylene terephthalate or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

The first electrode 102, the second electrode 104, and the separator 106 may be impregnated with an electrolyte (e.g., when accommodated in a case). The electrolyte may be, for example, a liquid electrolyte, a solid electrolyte, a gel electrolyte, or a combination thereof.

The electrode assembly 1 may be formed by sequentially winding or stacking the first electrode 102, the separator 106, and the second electrode 104. The first electrode 102, the second electrode 104, and the separator 106 form a stack structure 100 in one direction. That is, the electrode assembly 1 may be a structure in which sheet-type multiples of the first electrode 102 and the second electrode 104 are alternately stacked with the separator 106 interposed therebetween.

According to the present invention, the separator 106 is disposed between the first electrode 102 and the second electrode 104. The separator 106 may electrically insulate the first electrode 102 and the second electrode 104, and may allow ions (for example, lithium ions) to be exchanged between the first electrode 102 and the second electrode 104. The separator 106 may have a sufficient length to ensure complete insulation between the first electrode 102 and the second electrode 104 even if the electrode assembly 1 contracts or expands during charging and discharging.

According to some embodiments of the present invention, the stack structure 100 may have a cylindrical shape. Each of the first electrode 102, the second electrode 104, and the separator 106 may be circular sheets. Further, the diameter of the first electrode 102 may be the same as the diameter of the second electrode 104. To prevent a short circuit, the diameter of the separator 106 may be greater than or equal to the diameter of the first electrode 102 and the second electrode 104.

According to some embodiments of the present invention, to form the stack structure 100, the first electrode 102, the separator 106, and the second electrode 104 may be stacked so as to share the same central axis A. Referring to FIG. 2, in the stack structure 100, the stacking direction may be parallel to the central axis A and may be a direction from the bottom to the top of FIG. 2.

The first electrode substrate tab 110 is electrically connected to the first electrode 102. For example, the first electrode substrate tab 110 may be formed by partially extending a non-coated portion of the first electrode 102 or by connecting a separate conductor to the non-coated portion of the first electrode 102. Likewise, the second electrode substrate tab 120 is electrically connected to the second electrode 104. For example, the second electrode substrate tab 120 may be formed by partially extending a non-coated portion of the second electrode 104 or by connecting a separate conductor to the non-coated portion of the second electrode 104.

According to the present invention, the first electrode substrate tab 110 includes a first substrate 111 and a second substrate 113. The first substrate 111 protrudes from the first electrode 102 in a first direction 211 crossing the stacking direction of the stack structure 100. Also, the second substrate 113 protrudes from the first electrode 102 in a second direction 213 crossing the stacking direction of the stack structure 100.

Here, the first direction 211 and the second direction 213 differ from each other. Specifically, the first direction 211 and the second direction 213 may be radial directions based on the central axis A. Based on the central axis A, the first direction 211 and the second direction 213 may form a radial angle of 1-90 degrees, 3-30 degrees, or 6-15 degrees.

According to some embodiments of the present invention, the second electrode substrate tab 120 may include a third substrate 122 and a fourth substrate 124. The third substrate 122 may protrude from the second electrode 104 in a third direction 222 crossing the stacking direction of the stack structure 100. Also, the fourth substrate 124 may protrude from the second electrode 104 in a fourth direction 224 crossing the stacking direction of the stack structure 100.

Here, the third direction 222 and the fourth direction 224 may differ from each other. The third direction 222 and the fourth direction 224 may be radial directions based on the central axis A. Based on the central axis A, the third direction 222 and the fourth direction 224 may form a radial angle of 1-90 degrees, 3-30 degrees, or 6-15 degrees.

According to some embodiments of the present invention, in the electrode assembly 1 including the stack structure 100, by designing different protrusion directions of multiple electrode substrate tabs (for example, the first electrode substrate tab 110 and the second electrode substrate tab 120), stress applied to the electrodes (for example, the first electrode 102 and the second electrode 104) during charging and discharging of the secondary battery may be dispersed and reduced. The first electrode substrate tab 110 and the second electrode substrate tab 120 may be arranged along a side surface of the stack structure 100, which is cylindrical, thus surrounding outer surfaces of the first electrode 102, the second electrode 104, and the separator 106 to mitigate impact. Also, because the first electrode substrate tab 110 and the second electrode substrate tab 120 are arranged along the side surface of the stack structure 100, which is cylindrical, the circular shapes of the first electrode 102, the second electrode 104, and the separator 106 may be maintained without deformation. When the electrode assembly 1 is housed in a cylindrical case, creation of internal height differences that would reduce the energy density of the electrode assembly 1 may be minimized.

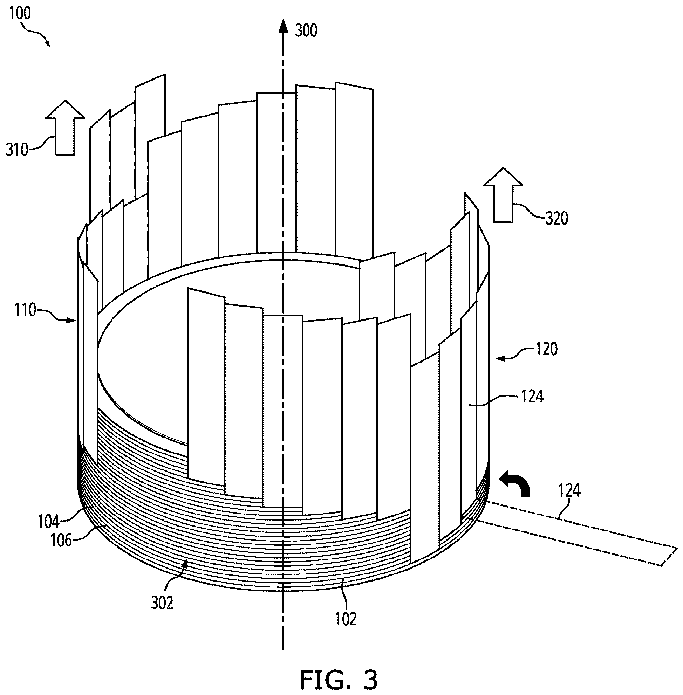

According to some embodiments of the present invention, the first electrode substrate tab 110 and the second electrode substrate tab 120 may be bent in a direction parallel with the stacking direction of the stack structure 100 and arranged along the side surface of the stack structure 100. A more detailed explanation is provided below with reference to FIG. 3.

According to an embodiment of the present invention, the electrode assembly 1 may further include a first electrode tab 130 connected to the first electrode substrate tab 110. For example, the first electrode tab 130 may contact end portions of each of the first substrate 111 and the second substrate 113. According to some embodiments of the present invention, the first electrode tab 130 may be disposed on an upper surface of the stack structure 100. The first electrode tab 130 may have a shape corresponding to a portion of an arc of the upper surface of the stack structure 100 so as to contact both the first substrate 111 and the second substrate 113 that are arranged along the side surface of the stack structure 100. Also, a portion of the first electrode tab 130 may be bent or protruded toward the center of the stack structure 100 in order to connect to an external terminal (for example, a first electrode terminal).

According to an embodiment of the present invention, the electrode assembly 1 may further include a second electrode tab 140 connected to the second electrode substrate tab 120. For example, the second electrode tab 140 may contact end portions of each of the third substrate 122 and the fourth substrate 124. According to some embodiments of the present invention, the second electrode tab 140 may be disposed on an upper surface of the stack structure 100. The second electrode tab 140 may have a shape corresponding to a portion of an arc of the upper surface of the stack structure 100 so as to contact both the third substrate 122 and the fourth substrate 124 that are arranged along the side surface of the stack structure 100. Also, a portion of the second electrode tab 140 may be bent or protruded toward the center of the stack structure 100 in order to connect to an external terminal (for example, a second electrode terminal).

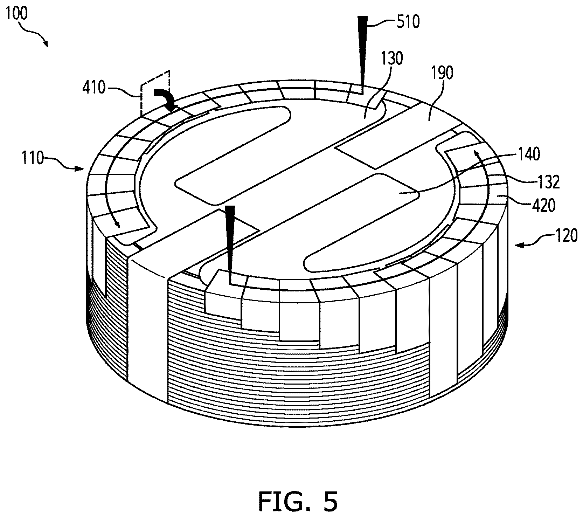

End portions of each of the first substrate 111 and the second substrate 113 may be cut, so as to contact the first electrode tab 130 effectively, and then coupled by a method such as welding. For example, end portions of the first substrate 111 and the second substrate 113 and the first electrode tab 130 may be coupled by a weld 132. Similarly, after end portions of each of the third substrate 122 and the fourth substrate 124 are cut, they may be coupled by a method such as welding so as to contact the second electrode tab 140 effectively. A more detailed explanation is provided below with reference to FIG. 5.

A finishing tape 190 may be disposed on an outer surface of the electrode assembly 1. The stack structure 100 formed by stacking the first electrode 102, the separator 106, and the second electrode 104 in sequence may be fixed by the finishing tape 190.

The first electrode substrate tab 110 may further include one or more additional substrates such as a fifth substrate 115. One or more additional substrates including the fifth substrate 115 may be configured identically or similarly to the first substrate 111 and the second substrate 113. For example, the fifth substrate 115 may also protrude from the first electrode 102 in one direction that crosses the stacking direction of the stack structure 100, and that direction can be different from the direction in which the other substrates of the first electrode substrate tab 110 protrudes (for example, the first direction 211 in which the first substrate 111 protrudes or the second direction 213 in which the second substrate 113 protrudes). Also, the fifth substrate 115 may be bent in a direction parallel with the stacking direction of the stack structure 100 and arranged along the side surface of the stack structure 100, which is cylindrical. In FIG. 1, the first electrode substrate tab 110 is depicted as including three or more substrates (for example, the first substrate 111, the second substrate 113, and the third substrate 115). However, the number of multiple substrates included in the first electrode substrate tab 110 may vary.

The second electrode substrate tab 120 may further include one or more additional substrates such as a sixth substrate 126. One or more substrates including the sixth substrate 126 may be configured identically to the third substrate 122 and the fourth substrate 124. For example, the sixth substrate 126 may also protrude from the second electrode 104 in one direction crossing the stacking direction of the stack structure 100, and that direction may differ from the direction in which the other substrates of the second electrode substrate tab 120 protrudes (for example, the third direction 222 in which the third substrate 122 protrudes or the fourth direction 224 in which the fourth substrate 124 protrudes). Also, the sixth substrate 126 may be bent in a direction parallel with the stacking direction of the stack structure 100 and arranged along the side surface of the stack structure 100, which is cylindrical. In FIG. 1, the second electrode substrate tab 120 is depicted as including three or more substrates (for example, the third substrate 122, the fourth substrate 124, and the sixth substrate 126). However, the number of multiple substrates included in the second electrode substrate tab 120 may vary.

According to some embodiments of the present invention, while designing the stack structure of the electrode assembly in a cylindrical shape, an internal space of a cylindrical case of a secondary battery may be used to the maximum extent, so that a secondary battery with high capacity and energy density can be provided.

FIG. 3 is a diagram illustrating bending directions of electrode substrate tabs of an electrode assembly according to an embodiment of the present invention. A description of elements identical to those described with reference to FIGS. 1 and 2 is omitted.

Referring to FIG. 3, according to some embodiments of the present invention, the first electrode substrate tab 110 and the second electrode substrate tab 120 may be bent in a direction parallel with a stacking direction 300 of the stack structure 100. Also, according to some embodiments of the present invention, the stack structure 100 may have a cylindrical shape. Through this configuration, the first electrode substrate tab 110 and the second electrode substrate tab 120 may be arranged along a side surface 302 of the stack structure 100, which is cylindrical.

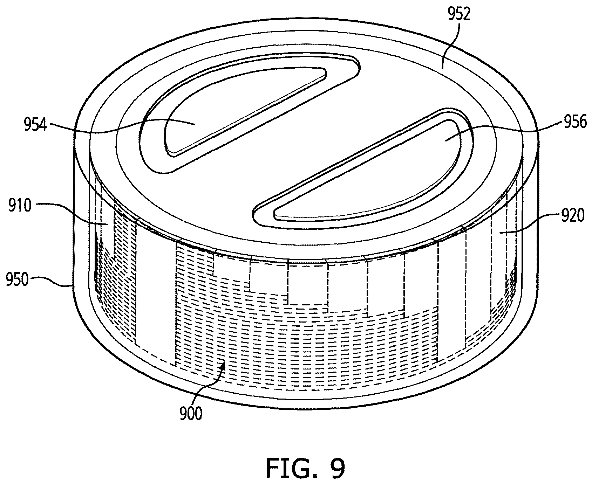

As illustrated in FIG. 3, according to an embodiment of the present invention, a bending direction 310 of the first electrode substrate tab 110 may be the same as a bending direction 320 of the second electrode substrate tab 120. For example, the bending direction 310 of the first electrode substrate tab 110 and the bending direction 320 of the second electrode substrate tab 120 may be the same as the stacking direction 300 of the stack structure 100. A more detailed explanation is provided below with reference to FIG. 9.

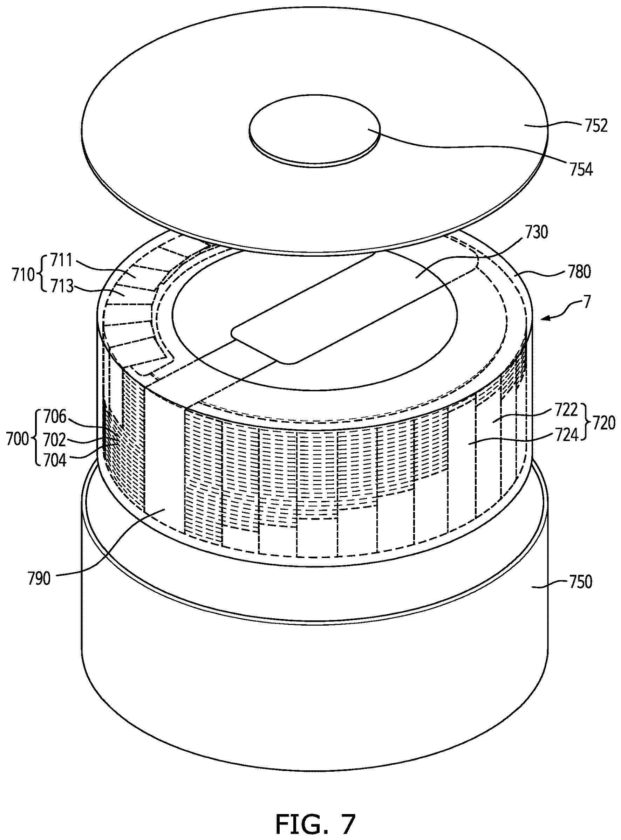

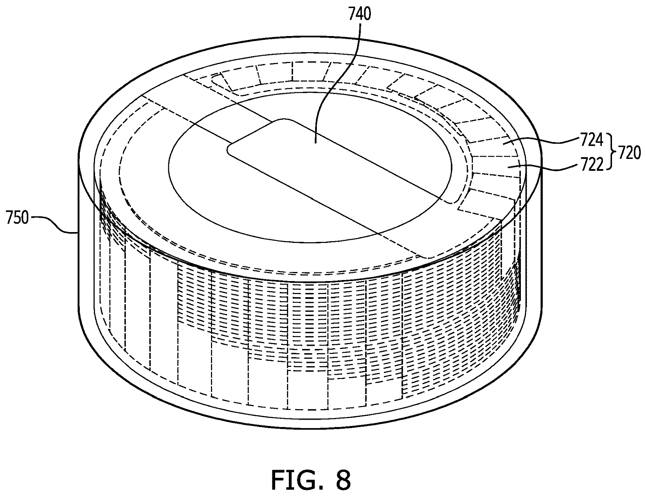

Unlike FIG. 3, in an embodiment of the present invention, the bending direction 310 of the first electrode substrate tab 110 may be opposite to the bending direction 320 of the second electrode substrate tab 120. For example, the bending direction 310 of the first electrode substrate tab 110 may be the same as the stacking direction 300 of the stack structure 100, while the bending direction 320 of the second electrode substrate tab 120 may be opposite to the stacking direction 300 of the stack structure 100. A more detailed explanation is provided below with reference to FIGS. 7 and 8.

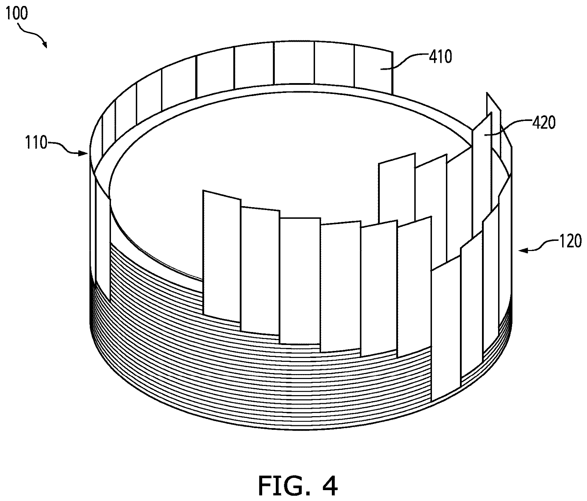

FIG. 4 is a diagram illustrating a process of cutting end portions of electrode substrate tabs of an electrode assembly according to an embodiment of the present invention. A description of elements identical to those described with reference to FIGS. 1 through 3 is omitted.

Referring to FIG. 4, the first electrode substrate tab 110 may have its end portion 410 cut so as to protrude a uniform height from an upper surface of the stack structure 100. Although FIG. 4 depicts only the first electrode substrate tab 110 being cut, the second electrode substrate tab 120 may likewise have its end portion 420 cut so as to protrude a uniform height from the upper surface of the stack structure 100. The first electrode substrate tab 110 or the second electrode substrate tab 120 may be formed by overlapping multiple metal substrates.

According to an embodiment, the end portion 410 of the first electrode substrate tab 110 may be cut by mechanical cutting such as punching, laser cutting, ultrasonic cutting, chemical etching, or a combination of these methods.

FIG. 5 is a diagram illustrating a process of welding end portions of electrode substrate tabs of an electrode assembly to electrode tabs according to an embodiment of the present invention. A description of elements identical to those described with reference to FIGS. 1 through 4 is omitted.

Referring to FIG. 5, according to some embodiments of the present invention, the first electrode substrate tab 110 and the second electrode substrate tab 120 may be secondarily bent in a direction toward the central axis of the stack structure 100. For example, as shown in FIG. 5, the end portion 410 of the first electrode substrate tab 110 may be secondarily bent toward the central axis of the stack structure 100.

The first electrode tab 130 may contact the end portion 410 of the first electrode substrate tab 110. According to some embodiments of the present invention, the first electrode tab 130 may be disposed on the upper surface of the stack structure 100. The first electrode tab 130 may have a shape corresponding to a portion of an arc of the upper surface of the stack structure 100 so as to contact the first electrode substrate tab 110 arranged along the side surface of the stack structure 100. Also, a portion of the first electrode tab 130 may be bent or protruded toward the center of the stack structure 100 so as to connect to an external terminal (for example, a first electrode terminal).

The second electrode tab 140 may contact the end portion 420 of the second electrode substrate tab 120. According to some embodiments of the present invention, the second electrode tab 140 may be disposed on the upper surface of the stack structure 100. The second electrode tab 140 may have a shape corresponding to a portion of an arc of the upper surface of the stack structure 100 so as to contact the second electrode substrate tab 120 arranged along the side surface of the cylindrical shape. Also, a portion of the second electrode tab 140 may be bent or protruded toward the center of the stack structure 100 so as to connect to an external terminal (for example, a second electrode terminal).

After each of the end portion 410 of the first electrode substrate tab 110 and the portion 420 of the second electrode substrate tab 120 are secondarily bent so as to contact the first electrode tab 130 or the second electrode tab 140 effectively, they may be coupled by a method such as welding. For example, the end portion 410, and the end portion 420 of each of the first electrode substrate tab 110 and the second electrode substrate tab 120 may be welded and coupled to the first electrode tab 130 or the second electrode tab 140 by a welder 510. Through this procedure, a weld 132 may be formed.

Specifically, the first electrode substrate tab 110 and the first electrode tab 130, or the second electrode substrate tab 120 and the second electrode tab 140, may be welded by any one method selected from ultrasonic welding, laser welding, resistance welding, tungsten inert gas (TIG) welding, or a combination thereof. The welding method may be other than the aforementioned types of welding, and various methods generally used for welding two materials may be used according to a person of ordinary skill in the art.

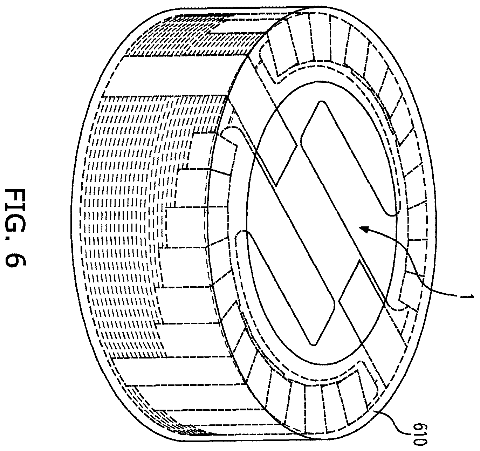

FIG. 6 is a perspective view of an electrode assembly according to an embodiment of the present invention.

Referring to FIG. 6, the outer surface of an electrode assembly 1 according to an embodiment may be packaged with a cover tape 610. The cover tape 610 may include a separator of the electrode assembly 1 or an appropriate insulating material used as an insulator in the relevant industry. According to an embodiment, the outer surface of the electrode assembly 1 may be a portion of an insulating material that extends from the separator so as to prevent an active material constituting the first electrode or the second electrode from being exposed to the outside.

For example, the cover tape 610 may include a polymer such as ethylene propylene rubber (EPR), polypropylene (PP), polyimide (PI), polyethylene terephthalate (PET), polycarbonate (PC), or a combination thereof.

In another example, the cover tape 610 may include a ceramic material such as an epoxy resin, alumina (Al2O3), zirconia (ZrO2), an aramid fiber, Nomex, or a combination thereof. However, the material of the cover tape 610 may include various materials having suitable plasticity and insulation properties, depending on selection.

FIG. 7 is an exploded view of a secondary battery according to an embodiment of the present invention, and FIG. 8 is a perspective view of a secondary battery according to an embodiment of the present invention.

Referring to FIGS. 7 and 8, a secondary battery according to an embodiment of the present invention includes an electrode assembly 7, a case 750 accommodating the electrode assembly 7, and a cap assembly 752 sealing an open surface of the case 750.

The electrode assembly 7 includes a first electrode 702, a second electrode 704, a separator 706 interposed between the first electrode 702 and the second electrode 704, a first electrode substrate tab 710 connected to the first electrode 702, and a second electrode substrate tab 720 connected to the second electrode 704.

The first electrode 702, the second electrode 704, and the separator 706 form a stack structure 700 stacked in one direction. Also, the first electrode substrate tab 710 includes a first substrate 711 protruding from the first electrode 702 in a first direction intersecting (or crossing) the stacking direction of the stack structure 700 and a second substrate 713 protruding from the first electrode 702 in a second direction intersecting (or crossing) the stacking direction. Here, the first direction and the second direction differ from each other.

The second electrode substrate tab 720 may include a third substrate 722 protruding from the second electrode 704 in a third direction crossing the stacking direction of the stack structure 700 and a fourth substrate 724 protruding from the second electrode 704 in a fourth direction crossing the stacking direction. Here, the third direction and the fourth direction may differ from each other.

The case 750 forms the overall external appearance of the secondary battery and may be formed of a conductive metal such as aluminum, an aluminum alloy, or steel plated with nickel. According to an embodiment, the case 750 and the cap assembly 752 may be formed of the same metallic material. The metallic material may include stainless steel (SUS) or aluminum (Al). However, this is exemplary, and the case 750 may be formed of various metallic materials that satisfy the strength requirements of a secondary battery and resistance to external impact.

According to some embodiments of the present invention, the stack structure 700 may have a cylindrical shape. The first electrode substrate tab 710 and the second electrode substrate tab 720 may be bent in parallel with the stacking direction of the stack structure 700. Through this configuration, the first electrode substrate tab 710 and the second electrode substrate tab 720 may be arranged along a side surface of the stack structure 700 (cylindrical).

In an embodiment of the present invention, a bending direction of the first electrode substrate tab 710 may be opposite to a bending direction of the second electrode substrate tab 720. As shown in FIG. 7, the bending direction of the first electrode substrate tab 710 may be the same as the stacking direction of the stack structure 700, while the bending direction of the second electrode substrate tab 720 may be opposite to the stacking direction of the stack structure 700. Here, the stacking direction of the stack structure 700 may be a direction from the bottom to the top of FIG. 7.

According to some embodiments of the present invention, the electrode assembly 7 may further include a first electrode tab 730 connected to the first electrode substrate tab 710. Also, the cap assembly 752 may include a first electrode terminal 754 electrically connected to the first electrode tab 730.

The first electrode 702 of the electrode assembly 7 may be electrically connected to a portion of the first electrode terminal 754 located at the lower end of the cap assembly 752. For example, after an end portion of the first electrode substrate tab 710 connected to the electrode assembly 7 is bent, it may be welded and coupled to the first electrode tab 730. At least a portion of the first electrode tab 730 may be bent or protruded toward the center of the stack structure 700 in order to connect to the first electrode terminal 754.

The second electrode 704 may be electrically connected to the case 750. For example, the electrode assembly 7 may further include a second electrode tab 740 connected to the second electrode substrate tab 720, and the second electrode tab 740 may be electrically connected to the case 750.

In another embodiment, unlike what is depicted in FIG. 7, a bending direction of the first electrode substrate tab 710 may be opposite to the stacking direction of the stack structure 700, and a bending direction of the second electrode substrate tab 720 may be the same as the stacking direction of the stack structure 700.

FIG. 9 is a perspective view of a secondary battery according to an embodiment of the present invention.

Referring to FIG. 9, according to some embodiments of the present invention, the first electrode substrate tab 910 and the second electrode substrate tab 920 may be bent in a direction parallel with the stacking direction of the stack structure 900. Here, the stack structure 900 may have a cylindrical shape. Through this configuration, the first electrode substrate tab 910 and the second electrode substrate tab 920 may be arranged along a side surface of the stack structure 900 that is cylindrical.

As shown in FIG. 9, in an embodiment of the present invention, a bending direction of the first electrode substrate tab 910 may be the same as a bending direction of the second electrode substrate tab 920. For example, the bending direction of the first electrode substrate tab 910 and the bending direction of the second electrode substrate tab 920 may be the same as the stacking direction of the stack structure 900. Here, the stacking direction of the stack structure 900 may be a direction from the bottom to the top of FIG. 9.

According to some embodiments of the present invention, a cap assembly 952 sealing an open surface of a case 950 may include a first electrode terminal 954 electrically connected to the first electrode and a second electrode terminal 956 electrically connected to the second electrode. For example, the first electrode terminal 954 may be connected to the first electrode tab 130 of FIG. 1, and the second electrode terminal 956 may be connected to the second electrode tab 140 of FIG. 1.

In the present invention, the secondary battery may be a coin cell or a button cell, or may be a cylindrical or pin-type battery.

For illustrative purposes, FIGS. 1 through 9 illustrate the secondary battery in the form of a coin secondary battery, but the scope of the present invention includes secondary batteries of any shape, such as prismatic secondary batteries or cylindrical secondary batteries.

The secondary battery may be a lithium battery cell, a sodium battery cell, or the like. However, the scope of the present invention includes all batteries that repeatedly provide electrical power through charging and discharging. According to an embodiment, if the secondary battery is a lithium battery cell, which exhibits excellent lifespan characteristics and high-rate characteristics, it may be used in an electric vehicle (EV). For example, it may be used in a plug-in hybrid electric vehicle (PHEV) or another hybrid electric vehicle. Additionally, the lithium battery cell may be used in fields requiring a wide range of power storage, for example, in earphones, wearable devices, smartphones, tablet PCs, electric bicycles, electric power tools, etc., but may vary.

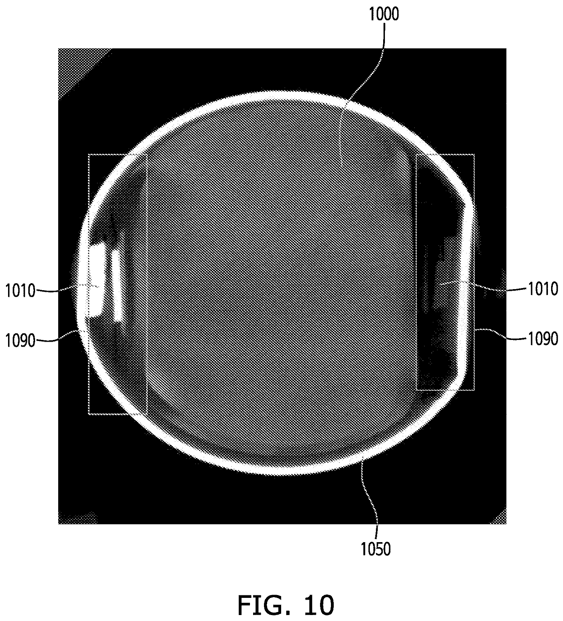

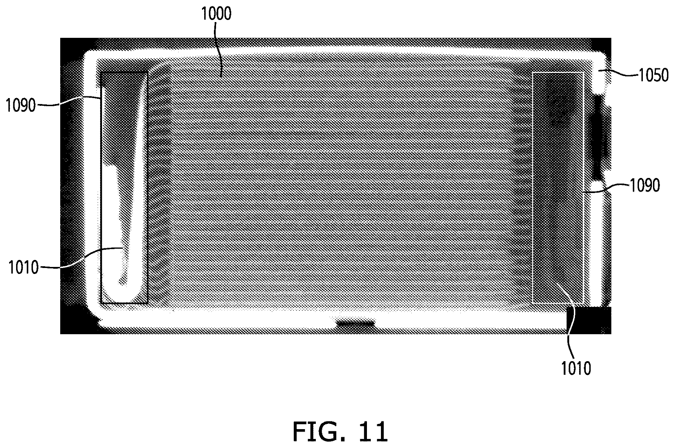

FIG. 10 and FIG. 11 are cross-sectional views illustrating the interior of a conventional secondary battery, as comparative examples.

Referring to FIGS. 10 and 11, an electrode assembly 1000 may be inserted into a case 1050 of a conventional secondary battery. In the conventional electrode assembly, a substrate tab 1010 may be formed by overlapping or stacking multiple substrates that protrude in the same direction. Because of this configuration, unnecessary empty space 1090 may be formed in the case 1050 of the secondary battery, resulting in a decrease in the overall energy density of the secondary battery.

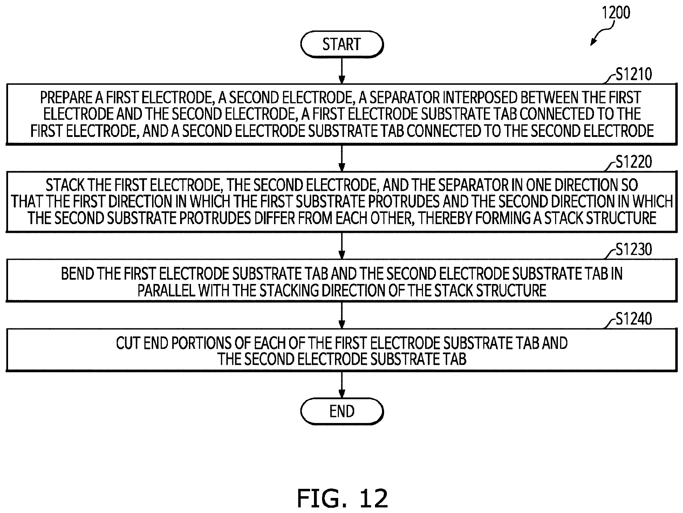

FIG. 12 is a flowchart illustrating an example of a method of manufacturing an electrode assembly according to an embodiment of the present invention.

A method 1200 of manufacturing an electrode assembly according to an embodiment of the present invention may begin by preparing a first electrode, a second electrode, a separator interposed between the first electrode and the second electrode, a first electrode substrate tab connected to the first electrode, and a second electrode substrate tab connected to the second electrode (S1210). The first electrode substrate tab may include a first substrate protruding from the first electrode in a first direction crossing a stacking direction of the stack structure and a second substrate protruding from the first electrode in a second direction crossing the stacking direction, and the second electrode substrate tab may include a third substrate protruding from the second electrode in a third direction crossing the stacking direction and a fourth substrate protruding from the second electrode in a fourth direction crossing the stacking direction.

Then, the first electrode, the second electrode, and the separator may be stacked in one direction so that the first direction in which the first substrate protrudes and the second direction in which the second substrate protrudes differ from each other, thereby forming a stack structure (S1220). According to an embodiment, the third direction in which the third substrate protrudes and the fourth direction in which the fourth substrate protrudes may differ from each other. Also, according to an embodiment, the first electrode, the separator, and the second electrode may be stacked so as to share the same central axis, and the first direction through the fourth direction may be radial directions based on the central axis.

Subsequently, the first electrode substrate tab and the second electrode substrate tab may be bent in a direction parallel with the stacking direction of the stack structure (S1230). According to an embodiment, the stack structure may have a cylindrical shape, and the first electrode substrate tab and the second electrode substrate tab may be arranged along a side surface of the stack structure. Here, a bending direction of the first electrode substrate tab may be the same as or opposite to a bending direction of the second electrode substrate tab.

Then, end portions of each of the first electrode substrate tab and the second electrode substrate tab may be cut (S1240).

Next, the first electrode substrate tab and the second electrode substrate tab may be secondarily bent in a direction toward the central axis of the stack structure. According to an embodiment, the electrode assembly may further include a first electrode tab connected to the first electrode substrate tab, and the first electrode tab may contact end portions of each of the first substrate and the second substrate. Here, the first electrode tab may be disposed on an upper surface of the stack structure. According to an embodiment, the electrode assembly may further include a second electrode tab connected to the second electrode substrate tab, and the second electrode tab may contact end portions of each of the third substrate and the fourth substrate. Here, the second electrode tab may be disposed on an upper surface of the stack structure.

There is increasing demand for an electrode assembly with sufficiently high energy density while being small in size, in accordance with the limited space in the accommodating can of the secondary battery, and for a secondary battery including such an electrode assembly.

According to some embodiments of the present invention, in a stack-structured electrode assembly, by designing different protrusion directions of multiple electrode substrate tabs (for example, the first electrode substrate tab and the second electrode substrate tab), stress applied to the electrodes (the first electrode and the second electrode) during charging and discharging of the secondary battery may be reduced.

According to some embodiments of the present invention, while designing the stack structure of the electrode assembly to have a cylindrical shape, an internal space of a secondary battery case may be utilized to the maximum extent, thereby providing a secondary battery with high capacity and energy density.

Although the present invention has been described above with respect to embodiments thereof, the present invention is not limited thereto. Various modifications and variations can be made by those skilled in the art within the spirit of the present invention and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An electrode assembly (1), comprising:
a first electrode (102);
a second electrode (104);
a separator (106) between the first electrode (102) and the second electrode (104);
a first electrode substrate tab (110) connected to the first electrode (102); and
a second electrode substrate tab (120) connected to the second electrode (104),
wherein the first electrode (102), the second electrode (104), and the separator (106) have a stack structure in one direction,
wherein the first electrode substrate tab (110) comprises a first substrate (111) protruding from the first electrode (102) in a first direction (211) crossing a stacking direction of the stack structure and a second substrate (113) protruding from the first electrode (102) in a second direction (113) crossing the stacking direction, and
wherein the first direction (211) and the second direction (213) differ from each other.

2. The electrode assembly (1) as claimed in claim 1, wherein the second electrode substrate tab (120) comprises:
a third substrate (122) protruding from the second electrode (104) in a third direction (222) crossing the stacking direction, and
a fourth substrate (124) protruding from the second electrode (104) in a fourth direction (224) crossing the stacking direction, resulting in first to fourth directions (211, 213, 222, 224), and
wherein the third direction (222) and the fourth direction (224) differ from each other.

3. The electrode assembly (1) as claimed in claim 1 or 2,
wherein the stack structure has a cylindrical shape, and
wherein the first electrode substrate tab (110) and the second electrode substrate tab (120) are bent in a direction parallel with the stacking direction of the stack structure, and the first electrode substrate tab (110) and the second electrode substrate tab (120) being arranged along a side surface (302) of the stack structure.

4. The electrode assembly (1) as claimed in claim 2 or 3, wherein:
the first electrode (102), the separator (106), and the second electrode (104) share a same central axis (300), and
the first to fourth directions (211, 213, 222, 224) are radial directions based on the central axis.

5. The electrode assembly (1) as claimed in any one of claims 1 to 4, wherein a bending direction (310) of the first electrode substrate tab (110) is the same as a bending direction (320) of the second electrode substrate tab (120).

6. The electrode assembly (1) as claimed in any one of claims 1 to 4, wherein a bending direction of the first electrode substrate tab (110) is opposite to a bending direction of the second electrode substrate tab (120).

7. The electrode assembly (1) as claimed in any one of the preceding claims, wherein the first electrode substrate tab (110) and the second electrode substrate tab (120) are secondarily bent in a direction toward a central axis of the stack structure.

8. The electrode assembly (1) as claimed in any one of the preceding claims, further comprising a first electrode tab (130) connected to the first electrode substrate tab (110),
wherein the first electrode tab (130) contacts end portions (410) of each of the first substrate (111) and the second substrate (113), and
wherein the first electrode tab (130) is on an upper surface of the stack structure.

9. The electrode assembly (1) as claimed in any one of claims 2 to 8, further comprising a second electrode tab (140) connected to the second electrode substrate tab (120),
wherein the second electrode tab (140) contacts end portions (420) of each of the third substrate (122) and the fourth substrate (124), and
wherein the second electrode tab (140) is on an upper surface of the stack structure.

10. A secondary battery, comprising:
an electrode assembly (1, 7);
a case (750, 950) accommodating the electrode assembly (1, 7); and
a cap assembly (752, 952) sealing an open surface of the case (750, 950),
wherein the electrode assembly (1, 7) comprises:
a first electrode (102, 702);
a second electrode (104, 704);
a separator (106, 706) between the first electrode (102, 702) and the second electrode (104, 704);
a first electrode substrate tab (110, 710, 910) connected to the first electrode (102, 702); and
a second electrode substrate tab (120, 720, 920) connected to the second electrode (104, 704),
wherein the first electrode (102, 702), the second electrode (104, 704), and the separator (106, 706) have a stack structure in one direction,
wherein the first electrode substrate tab (110, 710, 910) comprises a first substrate (111, 711) protruding from the first electrode (102, 702) in a first direction (211) crossing a stacking direction of the stack structure and a second substrate (113, 713) protruding from the first electrode (102, 702) in a second direction (213) crossing the stacking direction, and
wherein the first direction (211) and the second direction (213) differ from each other.

11. The secondary battery as claimed in claim 10, wherein the second electrode substrate tab (120, 720, 920) comprises:
a third substrate (122, 722) protruding from the second electrode (104, 704) in a third direction (222) crossing the stacking direction; and
a fourth substrate (124, 724) protruding from the second electrode (104, 704) in a fourth direction (224) crossing the stacking direction, resulting in first to fourth directions, and
wherein the third direction (222) and the fourth direction (224) differ from each other.

12. The secondary battery as claimed in claim 10 or 11, wherein:
the stack structure has a cylindrical shape, and
the first electrode substrate tab (110, 710, 910) and the second electrode substrate tab (120, 720, 920) are bent in a direction parallel with the stacking direction of the stack structure, and the first electrode substrate tab (110, 710, 910) and the second electrode substrate tab (120, 720, 920) being arranged along a side surface of the stack structure.

13. The secondary battery as claimed in claim 11 or 12, wherein:
the first electrode (102, 702), the separator (106, 706), and the second electrode (104, 704) share a same central axis (300), and
the first to fourth directions (211, 213, 222, 224) are radial directions based on the central axis.

14. The secondary battery as claimed in any one of claims 10 to 13,
wherein a bending direction of the first electrode substrate tab (110, 710) is the same as a bending direction of the second electrode substrate tab (120, 720), and
wherein the cap assembly (752, 952) comprises:
a first electrode terminal (954) electrically connected to the first electrode (102, 702); and
a second electrode terminal (956) electrically connected to the second electrode (104, 704).

15. The secondary battery as claimed in any one of claims 10 to 13,
wherein a bending direction of the first electrode substrate tab (110, 710) is opposite to a bending direction of the second electrode substrate tab (120, 720), and
wherein the cap assembly (752, 952) comprises a first electrode terminal (754, 954) electrically connected to the first electrode (102, 702), and the second electrode (104, 704) is electrically connected to the case (750).
